Europäisches Patentamt

European Patent Office

Office européen des brevets

(19)

(11) Veröffentlichungsnummer: **0 008 382**
B1

## (12) EUROPÄISCHE PATENTSCHRIFT

(45) Veröffentlichungstag der Patentschrift:
06.01.82

(21) Anmeldenummer: 79102656.0

(22) Anmeldetag: 26.07.79

(51) Int. Cl.³: **B 29 D 7/22**

(54) Verfahren zum Prägen von thermoplastischen Kunststoffolien.

(30) Priorität: 03.08.78 DE 2833982

(43) Veröffentlichungstag der Anmeldung:
05.03.80 Patentblatt 80/5

(45) Bekanntmachung des Hinweises auf die Patenterteilung:
06.01.82 Patentblatt 82/1

(84) Benannte Vertragsstaaten:
AT BE CH DE FR GB IT NL SE

(56) Entgegenhaltungen:
AT-B-255 115
DE-A-2 423 208
DE-A-1 704 968
DE-A-1 779 204
DE-B-2 100 330
DE-C-1 126 126

(73) Patentinhaber: HOECHST AKTIENGESELLSCHAFT,
Postfach 80 03 20, D-6230 Frankfurt/Main 80 (DE)

(72) Erfinder: Baumgartl, Wilhelm, Schulstrasse 17,
D-8261 Hart/Alz (DE)
Erfinder: Funke, Hermann, Danziger Strasse 2,
D-8262 Altötting (DE)
Erfinder: Relff, Ulrich, Bonifatiusstrasse 1,
D-8262 Neuötting (DE)
Erfinder: Scheler, Franz, Edelweisstrasse 11,
D-8261 Burgkirchen/Alz (DE)

Verfahren zum Prägen von thermoplastischen Kunststoffolien

Die Erfindung betrifft ein Verfahren zum Prägen von Folien aus thermoplastischen Kunststoffen auf der Basis von Vinylchlorid, bei dem die Folie zwischen einem Prägewalzenpaar aus einer Prägewalze und einer Gegenwalze hindurchgeführt wird, wobei das Prägewalzenpaar in Folien-Laufrichtung mit der Laufgeschwindigkeit der Folie gedreht wird, die Prägewalze auf eine Temperatur von 150 bis 230° C erhitzt ist, die Folie eine Temperatur aufweist, die unterhalb der Temperatur der Prägewalze liegt, und in die Folie unter Druck das Prägemuster der Prägewalze eingeprägt wird.

Ein derartiges Prägeverfahren für thermoplastische Kunststoffolien ganz allgemein ist in der DE-A-1 779 204 beschrieben. Dabei ist es vor allem wichtig, daß die Folie bei Raumtemperatur dem Prägewalzenpaar zugeführt wird. Dieses Verfahren ist zwar energiesparend, weil lediglich die Prägewalze erhitzt wird. Nachteilig ist jedoch, daß die Oberfläche der Folie verhältnismäßig schwach geprägt ist.

Ferner ist aus der DE-B-2 100 330 ein Verfahren zur Herstellung biaxial orientierter Folien aus Polyester bekannt. Mit diesem ausschließlich auf Polyesterfolien gerichteten Verfahren soll die Aufwicklung dieser Folien verbessert werden. Zu diesem Zweck wird zunächst eine Längsverstreckung, dann eine Prägung und schließlich noch eine Querverstreckung der eingesetzten Polyesterfolien durchgeführt. Dadurch werden Folien mit mechanisch stabilen Querrillen erhalten, welche ein schnelles Entweichen der Luft beim Aufwickelvorgang und damit eine hohe Aufwickelgeschwindigkeit ermöglichen.

Der vorliegenden Erfindung liegt nun die Aufgabe zugrunde, ein Prägeverfahren für Folien aus thermoplastischen Kunststoffen auf der Basis von Vinylchlorid anzugeben, bei dem die Folien gleichmäßig und stark ausgeprägt werden und die erzeugten Prägungen auch bei einer Wärmebehandlung der geprägten Folien erhalten bleiben.

Diese Aufgabe wird bei dem eingangs genannten Verfahren dadurch gelöst, daß die zu prägende Folie

a) mit einer Geschwindigkeit von 5 bis 200 m/min,
b) mit einer Temperatur von 70 bis 130° C,
c) mit einem Prägedruck von 250 bis 400 N/cm Folienbreite,
d) mit einer Umschlingung an der Gegenwalze, die eine Temperatur von 70 bis 110° C aufweist, von 90 bis 180° C und
e) ohne Umschlingung an der Prägewalze,

zwischen dem Prägewalzenpaar hindurchgeführt wird.

Das Erhitzen der Prägewalze erfolgt zweckmäßigerweise durch Beaufschlagen der Walze mit einem Heizmittel, beispielsweise mit Wasserdampf, heißem Öl oder auch elektrischer Energie. Ihre Temperatur beträgt vorzugsweise 170 bis 210° C.

Das Erhitzen der Folie kann durch Kontakt-Erwärmung auf innerlich beheizten Walzen und/oder mittels Strahlungserwärmung, beispielsweise durch Infrarotstrahlung, erfolgen. Die Temperatur der Folie beträgt vorzugsweise 90 bis 120° C.

Das Prägewalzenpaar besteht beim erfindungsgemäßen Verfahren aus einer Prägewalze, vorzugsweise einer Stahlwalze vom Durchmesser von etwa 150 bis 300 mm, mit dem Prägemuster, und aus einer Gegenwalze, vorzugsweise einer Walze vom Durchmesser von etwa 150 bis 300 mm, mit einer glatten, elastischen Oberfläche, zweckmäßigerweise mit einem glatten Weichgummimantel. Die Gegenwalze wird zweckmäßigerweise gekühlt (z. B. mit Wasser), damit sich ihre Oberfläche nicht über 140° C erhitzt. Die Temperatur der Gegenwalze beträgt etwa 70 bis 110° C.

Die zu prägende Folie wird mit einer Geschwindigkeit von etwa 5 bis 200 m/min, vorzugsweise von etwa 10 bis 50 m/min, durch den Spalt des Prägewalzenpaares geführt, wobei auf die Folie ein Druck von etwa 250 bis 400 N/cm Folienbreite ausgeübt wird und dabei das Prägemuster eingeprägt wird. Die Druckausübung auf die Folie erfolgt durch Anpressen der Stahlwalze (Prägewalze) auf die Gummiwalze (Gegenwalze) oder der Gummiwalze auf die Stahlwalze. Das Anpressen geschieht im allgemeinen hydraulisch, pneumatisch oder mechanisch und ist regelbar.

Sofern beim erfindungsgemäßen Verfahren die doppelseitige (beidseitige) Prägung der Folie vorgenommen werden soll, wird die Folie nach Passieren des einen Prägespaltes unter nahezu gleichen Bedingungen noch durch einen zweiten Prägespalt geführt. Der zweite Prägespalt wird durch ein gleiches Prägewalzenpaar gebildet wie der erste Prägespalt, jedoch sind Prägewalze und Gegenwalze so angeordnet, daß die im ersten Prägespalt nicht verformte Folienseite geprägt wird. Der Abstand der beiden Prägewalzenpaare beträgt in der Regel 50 bis 500 mm, vorzugsweise 100 bis 250 mm. Damit die Folie auch dem zweiten Prägespalt mit der gemäß Erfindung erforderlichen Temperatur zugeführt wird, kann es zweckmäßig sein, sie nach Passieren des ersten Prägespaltes eine Heiz-oder Kühleinrichtung durchlaufen zu lassen.

Im folgenden soll das erfindungsgemäße Verfahren (bei doppelseitiger Prägung) anhand der Zeichnung näher veranschaulicht werden.

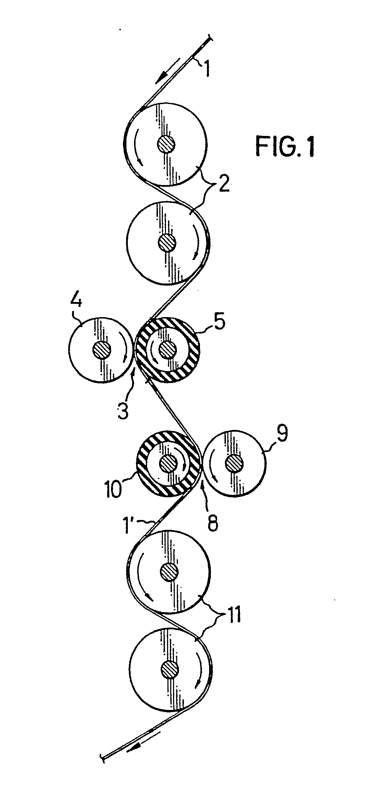

Fig. 1 zeigt in schematischer Darstellung das erfindungsgemäße Verfahren bei doppelseitiger Prägung mit einer dafür zweckmäßigen Vorrichtung.

Die beispielsweise von einem Kalander oder Extruder, einer Ziehstrecke oder von einer Abwickelrolle kommende Folie 1 wird (falls erforderlich) zur Einstellung der Temperatur durch eine Aufheiz- oder Abkühleinrichtung geführt, beispielsweise über ein Kühl- oder Heizwalzenpaar 2. Anschließend passiert die Folie den Prägespalt 3 des (mit der Laufgeschwindigkeit der Folie in deren Laufrichtung sich drehenden) Prägewalzenpaares, bestehend aus einer Prägewalze 4 (beispielsweise eine sandgestrahlte Stahlwalze) und aus einer Gegenwalze 5 (beispielsweise Gummi der Shore-A-Härte von etwa 65), wobei die der Prägewalze 4 zugewandte Folienseite geprägt wird. Die Folie 1 wird ohne Umschlingung der Prägewalze 4 und mit einer Umschlingung der Gegenwalze 5 von etwa 90 bis 180° durch den Prägespalt 3 geführt. Die Prägewalze 4 ist auf eine Temperatur von 150 bis 230° erhitzt. Nachdem die Folie 1 das erste Prägewalzenpaar 4, 5 durchlaufen hat und einseitig geprägt ist, läuft sie durch den Prägespalt 8 des (sich ebenfalls mit der Geschwindigkeit der Folie und in deren Laufrichtung drehenden) zweiten Prägewalzenpaares, bestehend aus der Prägewalze 9 und der Gegenwalze 10 (beide Walzen sind gleich den Walzen 4 und 5, liegen aber in umgekehrter Anordnung dazu), wobei die andere Folienseite geprägt wird. Nach Durchlaufen des zweiten Prägespaltes 8 (wobei die Folie in gleicher Umschlingung wie beim ersten Prägewalzenpaar geführt wird), wird die doppelseitig geprägte Folie 1' durch eine Kühlvorrichtung geführt, beispielsweise über ein Kühlwalzenpaar 11, wobei die Folie 1' auf Raumtemperatur abgekühlt wird. Anschließend wird die geprägte Folie 1' zweckmäßigerweise einer Aufwickeleinrichtung (nicht dargestellt) zugeführt.

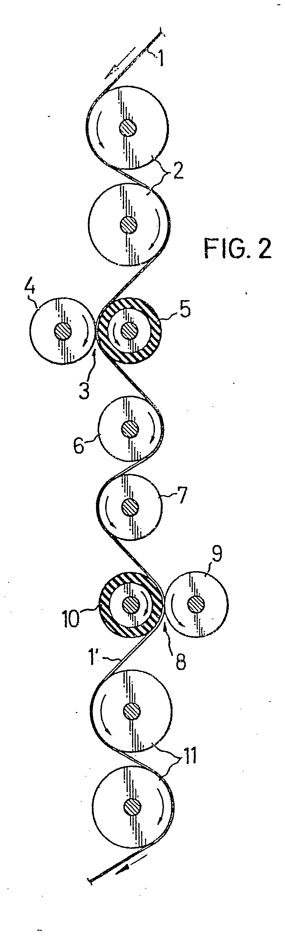

Fig. 2 zeigt in schematischer Darstellung das erfindungsgemäße Verfahren bei doppelseitiger Prägung mit einer weiteren dafür zweckmäßigen Vorrichtung.

Die Folie 1 wird — in Abwandlung des anhand von Fig. 1 beschriebenen Verfahrens — nach Verlassen des Prägespaltes 3 zwecks neuerlicher Einstellung auf die für den zweiten Prägevorgang im Prägespalt 8 erforderliche Temperatur über ein Walzenpaar 6, 7 geführt, das heizen oder kühlen kann.

Die Prägewalzen 4, 9 in Fig. 1 und Fig. 2 werden nicht angetrieben, sie werden durch die Reibung mit den Gegenwalzen 5 bzw. 10 beim Anpressen mitgedreht. Alle anderen Walzen in Fig. 1 und Fig. 2 sind angetrieben, z. B. mittels Elektromotor.

Beim erfindungsgemäßen Verfahren wird von Folien aus thermoplastischen Kunststoffen auf der Basis von Vinylchlorid ausgegangen. Geeignete Vinylchlorid-Polymerisate sind Vinylchlorid-Homopolymerisate oder Copolymerisate und Pfropfcopolymerisate aus Vinylchlorid und copolymerisierbaren Monomeren mit mindestens 50 Gew.-%, bezogen auf Polymerisat, vorzugsweise mit 95 bis 80 Gew.-%, an polymerisiertem Vinylchlorid.

Geeignete Comonomere sind beispielsweise Olefine und Diolefine, wie Etyhlen, Propylen, Butadien; Vinylester von geradkettigen oder verzweigten Carbonsäuren mit 2 bis 20, vorzugsweise 2 bis 4 C-Atomen, wie Vinylacetat, Vinylpropionat, Vinylbutyrat, Vinylstearat; Vinylhalogenide, wie Vinylfluorid, Vinylidenfluorid, Vinylidenchlorid; Vinylether; ungesättigte Säuren, wie Malein-, Fumar-, Acryl-, Methacrylsäure und deren Mono- oder Diester mit Mono- oder Dialkoholen mit 1 bis 10 C-Atomen; Acrylnitril, Styrol, Cyclohexylmaleinimid. Die Polymerisate auf der Basis von Vinylchlorid weisen in der Regel einen K-Wert nach Fikentscher von 50 bis 80, vorzugsweise 55 bis 70, auf.

Die Folien können auch aus Mischungen der genannten thermoplastischen Polymerisate bestehen. Bevorzugt sind Mischungen aus Vinylchlorid-Homo-, -Co- oder -Pfropfcopolymerisaten mit sogenannten Schlagzähharzen, wie beispielsweise den bekannten ABS-, MBS- und MABS-Polymerisaten oder chloriertem Polyethylen und gegebenenfalls mit sogenannten Fließhilfsmitteln (processing aids), wie beispielsweise niedermolekularem Polymethylmethacrylat, wobei der Anteil der Schlagzähharze und Fließhilfsmittel in der Regel 1 bis 15 Gew.-%, bezogen auf Vinylchlorid-Polymerisat, beträgt.

Den Vinylchlorid-Polymerisaten werden zweckmäßigerweise Verarbeitungshilfsstoffe, wie Wärme- und Lichtstabilisatoren, Gleitmittel sowie gegebenenfalls weitere Zusatzstoffe, und besondere Additive, wie Farbstoffe, Pigmente, optische Aufheller und Antistatik-Mittel zugesetzt. Vorzugsweise werden weichmacherfreie Kunststoffmassen eingesetzt; das Verfahren ist jedoch auch in Anwesenheit von Weichmachern in üblichen Mengen durchführbar.

Als Wärmestabilisatoren sind beispielsweise geeignet: Mono- und Dialkylzinnverbindungen mit 1 bis 10 c-Atomen im Alkylrest, bei denen die restlichen Wertigkeiten des Zinns über Sauerstoff und/oder Schwefelatome mit weiteren Substituenten verbunden sind; Aminocrotonsäureester; Harnstoff- und Thioharnstoffderivate; α-Phenylindol, Salze der Erdalkalimetalle, des Zinks und Cadmiums mit aliphatischen Carbonsäuren oder Oxycarbonsäuren. Bevorzugt werden Organo-Zinn-Schwefel-Stabilisatoren, wie

> Di-methyl-zinn-bis-(2-ethylhexyl-thioglykolat),
> Di-n-butylzinn-bis-(2-ethylhexyl-thioglykolat),
> Di-n-octylzinn-bis-(2-ethyl-hexyl-thioglykolat).

Die Stabilisatoren werden in Mengen von 0,2 bis 3 Gew.-%, bezogen auf thermoplastischen Kunststoff, eingesetzt; sie können auch in Mischung untereinander sowie mit üblichen Costabilisatoren und Antioxidantien eingesetzt werden.

Als Gleitmittel können beispielsweise ein oder mehrere höhere aliphatische Carbonsäuren und Oxycarbonsäuren sowie deren Ester und Amide, wie Stearinsäure, Montansäure, Bis-stearoyl- bzw. Bis-palmitoyl-ethylendiamin, Montansäureester von Ethandiol oder 1,3-Butandiol, gegebenenfalls teilweise verseift; Fettalkohole mit mehr als 10 C-Atomen, sowie deren Ether; niedermolekulare Polyolefine sowie Hartparaffine, in Mengen von 0,1 bis 4 Gew.-%, bezogen auf thermoplastischen Kunststoff, eingesetzt werden.

Als Weichmacher können beispielsweise ein oder mehrere Ester aromatischer oder aliphatischer Di- und Tricarbonsäuren, höherer Alkylsulfonsäuren und der Phosphorsäuren, wie Di-2-ethylhexylphthalat, Di-2-ethylhexyladipat oder -sebacat; Alkylsulfonsäureester des Phenols und Kresols; Trikresylphosphat oder epoxidierte Soja- oder Rizinusöle eingesetzt werden. Im Falle der Verwendung von Weichmachern beträgt deren Anteil, bezogen auf thermoplastischen Kunststoff, zweckmäßigerweise 10 bis 40 Gew.-%.

Die Bereitung der Mischungen (Kunststoffmassen) aus pulverförmigem thermoplastischem Kunststoff, Verarbeitungshilfsmitteln und gegebenenfalls weiteren Zusatzstoffen, erfolgt durch inniges Mischen der Komponenten, beispielsweise in einem in der Kunststoffverarbeitung üblichen Schnellmischer.

Die Herstellung der Folien kann nach den üblichen Verfahren, beispielsweise durch Kalandrierung oder Extrusion mittels Flachdüsenextruder oder Ringdüsenextruder mit Flachlegeeinrichtung, erfolgen.

Die Dicke der Folien, die nach dem erfindungsgemäßen Verfahren geprägt werden, beträgt in der Regel 0,050 bis 1 mm. Bevorzugt werden nach dem erfindungsgemäßen Verfahren relativ dicke Folien, das sind Folien mit einer Dicke von 0,200 bis 1 mm, vorzugsweise 0,300 bis 0,700 mm, geprägt.

Das erfindungsgemäße Verfahren zeichnet sich durch mehrere Vorteile aus. Die behandelten Folien werden gleichmäßig und stark ausgeprägt. Die Prägungen bleiben auch bei einer Wärmebehandlung der geprägten Folienbahnen, beispielsweise beim Tiefziehen oder bei Trocknungsvorgängen, erhalten. Das erfindungsgemäße Verfahren ist vielseitig anwendbar: Es können damit kontinuierlich Folien ein- oder beidseitig geprägt werden, die unmittelbar von einer Folien-Produktionseinrichtung, beispielsweise von einem Kalander, einem Flach- oder Runddüsen-Extruder mit Flachlegeeinrichtung oder auch von einer Folienstreck- bzw. einer Folienzieh-Vorrichtung, abgenommen werden, ebenso Folien, die nach einem beliebigen Folienherstellungsverfahren erhalten und bereits aufgewickelt bzw. gelagert worden sind.

Das neue Prägeverfahren ist besonders geeignet für das doppelseitige (beidseitige) Prägen von Folien aus thermoplastischen Kunststoffen auf der Basis von Vinylchlorid, weil dabei beim Prägen der zweiten Folienseite die Prägung (Prägemuster) der zuerst geprägten Folienseite überraschenderweise nicht negativ beeinflußt wird.

Die Art des auf der Prägewalze aufgebrachten Prägemusters ist für das erfindungsgemäße Verfahren nicht kritisch und kann nach verschiedensten Formen gestaltet sein. Vorzugsweise weist die Prägewalze ein durch Sandstrahlung erhaltenes Prägemuster auf, wobei Folien mit einseitig oder beidseitig gleichmäßig matter (rauher) Oberfläche erhalten werden.

Die nach dem erfindungsgemäßen Verfahren geprägten Folien können sehr vielseitig eingesetzt werden: z. B. als Dekorationsfolien oder als Bezugsfolien für Möbel, Decken, Polsterungen und ähnliches mehr. Ist die Prägung mit sandgestrahlten Prägewalzen vorgenommen worden, eignen sich die Folien auch als Kreditkartenfolie oder als Schreibfolie, da sie aufgrund der gleichmäßig rauhen, matten Oberfläche gut bedruckbar und mit Bleistift, Tinte oder anderen Beschriftungsmitteln beschreibbar sind. Das erfindungsgemäße Verfahren wird nun an Beispielen unter Bezugnahme auf Fig. 1 und Fig. 2 näher erläutert.

### Beispiel 1

Zum Prägen wird eine Hart-Polyvinylchlorid-Folie (bestehend im wesentlichen aus 80 Gew.-Teilen eines Mischpolymerisates mit K-Wert 60 aus 90 Gew.-Teilen Vinylchlorid und 10 Gew.-Teilen Vinylacetat, 18 Gew.-Teilen eines als Schlagzäh-Modifier üblichen Acrylnitril-Butadien-Styrol-Mischpolymerisates und aus geringen Mengen eines üblichen Gleitmittels und Zinnstabilisators) mit einer Dicke von 0,600 mm eingesetzt.

Die Folie wird auf der Vorrichtung gemäß Fig. 1 unter den folgenden Bedingungen beidseitig geprägt:

Laufgeschwindigkeit der Folie 25 m/min
Temperatur der Folie (die durch das Heizwalzenpaar 2 erhitzt wird): 110°C
Temperatur der Prägewalzen 4 und 9: 210°C
Anpreßdruck (hydraulisch mittels der Prägewalze 4 beim ersten Prägewalzenpaar 4, 5 und mittels der Gegenwalze 10 beim zweiten Prägewalzenpaar 9, 10): jeweils 360 N/cm
Umschlingung der Gegenwalze: etwa 120°
Abkühlung der geprägten Folie auf Raumtemperatur (etwa 25°C) durch das Kühlwalzenpaar 11.

### Beispiel 2

Zum Prägen wird eine Weich-Polyvinylchlorid-Folie (bestehend im wesentlichen aus 64 Gew.-Teilen eines Vinylchlorid-Homopolymerisates mit K-Wert 70, 35 Gew.-Teilen Dioctylphthalat als Weichmacher und aus geringen Mengen eines üblichen Gleitmittels und Barium-Cadmium-Stabilisators) mit einer Dicke von 0,200 mm eingesetzt.

Die Folie wird auf der Vorrichtung gemäß Fig. 2 unter den folgenden Bedingungen einseitig geprägt, wobei die Folie nach der Prägung im ersten Prägewalzenpaar 4, 5 über die Walzen 6 und 7, die als Kühlwalzen wirken, läuft und anschließend einer üblichen Aufwickeleinrichtung zugeführt wird:

Laufgeschwindigkeit der Folie: 15 m/min
Temperatur der Folie (die durch das Heizwalzenpaar 2 erhitzt wird): 90° C
Temperatur der Prägewalze 4: 175° C
Umschlingung der Gegenwalze: etwa 120°
Anpreßdruck (hydraulisch mittels der Prägewalze 4): 225 N/cm
Abkühlung der geprägten Folie auf Raumtemperatur durch die beiden auf etwa 20° C gekühlten Walzen 6, 7.

Die gemäß den Beispielen erhaltenen Folien sind gleichmäßig und stark ausgeprägt. Die Prägung, die in einer gleichmäßig matten Folienoberfläche in Erscheinung tritt, ist gegenüber Wärme beständig.

## Patentansprüche

1. Verfahren zum Prägen von Folien (1) aus thermoplastischen Kunststoffen auf der Basis von Vinylchlorid, bei dem die Folie zwischen mindestens einem Prägewalzenpaar (4, 5; 9, 10) aus einer Prägewalze (4; 9) und einer Gegenwalze (5; 10) hindurchgeführt wird, wobei das Prägewalzenpaar in Folienlaufrichtung mit der Laufgeschwindigkeit der Folie gedreht wird, die Prägewalze auf eine Temperatur von 150 bis 230° C erhitzt ist, die Folie eine Temperatur aufweist, die unterhalb der Temperatur der Prägewalze liegt, und in die Folie unter Druck das Prägemuster der Prägewalze eingeprägt wird, dadurch gekennzeichnet, daß die zu prägende Folie (1)

a) mit einer Geschwindigkeit von 5 bis 200 m/min,
b) mit einer Temperatur von 70 bis 130° C,
c) mit einem Prägedruck von 250 bis 400 N/cm Folienbreite,
d) mit einer Umschlingung an der Gegenwalze (5;10), die eine Temperatur von 70 bis 110° C aufweist, von 90 bis 180° und
e) ohne Umschlingung an der Prägewalze (4; 9)

zwischen dem Prägewalzenpaar hindurchgeführt wird.

2. Verfahren nach Anspruch 1, dadurch gekennzeichnet, daß die Folie nach dem Hindurchführen durch das Prägewalzenpaar (4, 5) durch ein weiteres gleiches Prägewalzenpaar (9, 10) hindurchgeführt wird, wobei die im ersten Prägewalzenpaar nicht geprägte Folienseite geprägt wird.

## Claims

1. Process for embossing sheets (1) of thermoplastic polymers on the basis of vinyl chloride, by passing the sheet between at least one pair of rollers (4, 5; 9, 10) consisting of an embossing roller (4, 9) and a counter roller (5, 10), whereby the pair of rollers turns in the direction and at the speed of the moving sheet, heating the embossing roller to a temperature of from 150 to 230° C, heating the sheet to a temperature below the temperature of the embossing roller and engraving with pressure the pattern of the embossing roller in the sheet, comprising passing the sheet (1) to be embossed between said pair of rollers

a) at a speed of from 5 to 200 m/min,
b) at a temperature of from 70 to 130° C,
c) at an embossing pressure of from 250 to 400 N/cm sheet's breadth,
d) at a wrapping degree of from 90 to 180 on the counter roller (5, 10), which is heated at a temperature of from 70 to 110° C and
e) without wrapping the embossing roller (4, 9).

2. The process of Claim 1, wherein said sheet is passed, after having left said pair of embossing rollers (4, 5), between a further identical pair of embossing rollers (9, 10), thus, embossing the face of said sheet which has not been embossed in the first pair of embossing rollers.

## Revendications

1. Procédé pour gaufrer des feuilles (1) en résines synthétiques thermoplastiques à base de chlorure de vinyle dans lequel la feuille est envoyée au travers d'au moins une paire de cylindres de gaufrage (4, 5; 9, 10) consistant en un cylindre gaufreur (4; 9) et un contre-cylindre (5; 10), la paire de cylindres de gaufrage tournant dans le sens du déplacement de la feuille et à la même vitesse que celle-ci, le cylindre gaufreur étant chauffé à une température de 150 à 230° C, la feuille présentant une température inférieure à la température du cylindre gaufreur et le dessin de gaufrage du cylindre gaufreur étant imprimé sous pression dans la feuille, procédé caractérisé en ce que la feuille à gaufrer (1) est envoyée au travers de la paire de cylindres de gaufrage

a) à une vitesse de 5 à 200 m/min,
b) à une température de 70 à 130° C,
c) sous une pression de gaufrage de 250 à 400 N par cm de largeur de la feuille,
d) avec un angle de contact de 90 à 180° sur le contre-cylindre (5; 10) qui présente une température de 70 à 110° C et
e) sans enroulement sur le cylindre gaufreur (4; 9).

2. Procédé selon la revendication 1, caractérisé en ce que la feuille, après être passée au travers de la paire de cylindres de gaufrage (4, 5), est envoyée au travers d'une autre paire identique de cylindres de gaufrage (9, 10) qui gaufrent la face de la feuille non gaufrée dans la première paire de cylindres de gaufrage.

FIG.1

FIG. 2